# FASCICULE DE BREVET EUROPEEN

(11) **EP 2 443 178 B1**
(45) Date de publication et mention de la délivrance du brevet: **24.07.2013**
(21) Numéro de dépôt: 10734166.1
(22) Date de dépôt: 15.06.2010
(51) Int. Cl.: C08G 77/08, C08G 77/12, C08G 77/16, C08L 83/06, C09D 183/04, C08L 83/04, C09J 7/02, C08J 7/04, C08J 9/00, C08J 9/02, B01J 31/22, B01J 31/28, B01J 31/02

(54) **COMPOSITION SILICONE RETICULABLE PAR DESHYDROGENOCONDENSATION EN PRESENCE D'UN CATALYSEUR NON METALLIQUE**
SILIKONZUSAMMENSETZUNG FÜR VERNETZUNG MITTELS DEHYDROKONDENSATION IN GEGENWART EINES METALLKATALYSATORS
SILICONE COMPOSITION SUITABLE FOR CROSS-LINKING BY DEHYDROCONDENSATION IN THE PRESENCE OF A NON-METAL CATALYST

(30) Priorité: 19.06.2009 FR 0902980
(43) Date de publication de la demande: 25.04.2012
(73) Titulaire: Bluestar Silicones France, 69007 Lyon (FR)
(72) Inventeur: MALIVERNEY, Christian, F-69690 Saint Julien sur Bibost (FR)
(74) Mandataire: Mekki, Boualem
(86) Numéro de dépôt international: PCT/FR2010/000439
(87) Numéro de publication internationale: WO 2010/149869

(56) Documents cités:
- EP-A1- 1 930 376
- EP-A1- 1 985 666
- US-A- 3 923 705
- US-A1- 2003 228 473
- US-A1- 2007 027 286

## Description

La présente invention concerne le domaine de la catalyse des réactions de déshydrogénocondensation permettant la polymérisation/réticulation de silicone. Les espèces réactives en jeu sont des monomères, oligomères, et/ou polymères de nature polyorganosiloxane

Les motifs réactifs concernés dans ces espèces sont d'une part les motifs ≡SiH et d'autre part les motifs ≡SiOH. La déshydrogénocondensation entre ces motifs réactifs silicones conduit à la formation de liaisons ≡Si-O-Si≡ et à la libération d'hydrogène gazeux.

Cette déshydrogénocondensation est une alternative aux voies de polymérisation/réticulation connues dans le domaine des silicones, à savoir la voie polyaddition par réaction entre des motifs ≡SiH et ≡Si-alcényle (vinyle), ainsi qu'à la voie polycondensation par réaction entre des motifs ≡SiOR et ≡SiOR (avec R = alkyle). Toutes ces voies de polymérisation / réticulation conduisent à des produits silicones plus ou moins polymérisés et plus ou moins réticulés, qui peuvent constituer des produits utilisables dans de multiples applications : adhésifs, produits d'étanchéification, produits de jointage, apprêt d'adhésion, revêtements anti-adhérents, mousses.....

Il est connu selon le brevet français FR-B-1209 131 qu'une réaction entre un silanol Ph₂Si(OH)₂ et un dit organosiloxane [(Me₂HSi)₂O] avec Me = méthyle et Ph = phényle, par déshydrogénocondensation peut être catalysée par un acide chloroplatinique (H₂PtCl₆, 6H₂O). **Le document** US 3 923 705 A **décrit également des catalyseurs à base de platine pour des réactions de deshydrogénocondensation.**
Il est aussi connu d'utiliser un complexe du rhodium (RhCl3 [(C8H17)2S]3), par exemple tel que cité dans le brevet américain US-B-4,262,107, un complexe du platine tel que le catalyseur de Karstedt, les catalyseurs métalliques à base de platine, de rhodium, de palladium, ou d'iridium. Comme catalyseur à base d'iridium on peut citer les composés suivants: IrCI(CO)(TPP)₂, Ir (CO)₂ (acac) ; Ir H(Cl)2 (TPP)₃; [IrCl(Cydooctène)₂]₂ Ir I(CO)(TPP)₂ et Ir H(CO)(TPP)₃ formules dans lesquelles TPP signifie un groupement triphénylphosphine et acac un groupement acétylacétonate.

**D'autres catalyseurs à base d'iridium sont décrits dans les documents** US2007/027286 A1 **et** US2003/228473 A1**.**

D'autres exemples, sont des catalyseurs comme les amines, le nickel colloïdal ou le dilaurate de dibutylétain (voir l'ouvrage de NOLL « Chemistry and technology of silicones », page 205, Academic Press, 1968-2ème édition). Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

D'autres catalyseurs tels que des dérivés de bore de type tris (pentafiuorophényl) borane sont décrits dans la demande de brevet français 25 FR-A-2 806 930.

Le brevet américain US-B-4,262,107 décrit une composition silicone comprenant un polydiméthyldisiloxane à extrémités silanol, un réticulant constitué par un polyorganosiloxane à motifs ≡SiH dans la chaîne et à extrémités triméthylsilyle et un catalyseur constitué par un complexe du rhodium (RhCl₃ [(C₈H₁₇)₂S]₃). Cette composition silicone réticulable par déshydrogénocondensation en présence d'un complexe de rhodium, peut être utilisée pour la réalisation de revêtements anti-adhérents sur des supports souples tels que le papier et les films plastiques ou métalliques. La réticulation s'opère à une température de 150°C.

La demande de brevet européen EP-A-1 167 424 décrit l'obtention de copolymères silicones blocs linéaires par déshydrogénocondensation d'un polydiméthylsiloxane à extrémités silanol et d'un polyorganosiloxane comprenant des groupements aromatiques et à extrémités ≡SiH en présence d'un catalyseur métallique qui peut-être à base de platine, de rhodium, de palladium ou d'iridium, le platine étant particulièrement préféré.

La demande de brevet français FR-A-2 806 930 décrit l'utilisation de dérivés de bore de type tris(pentatluorophényl)borane à titre de catalyseur thermoactivable pour la déshydrogénocondensation entre un polyorganosiloxane à motifs ≡SiH et un polyorganosiloxane à motifs terminaux ≡SiOH. De telles compositions silicones réticulables par déshydrogénocondensation en présence d'acides de Lewis du type des dérivés de bore, sont utilisables pour la fabrication de revêtements anti-adhérents sur supports souples, notamment sur papier, ainsi que dans la fabrication de mousses silicones réticulées dans lesquelles le dégagement d'hydrogène et la qualité du réseaux de réticulation sont contrôlés.

EP 1 985 666 A1 **et** EP 1 930 376 A1 décrivent des composés amine uniquement en tant que catalyseurs de condensation de polymères organiques.

Il ressort de cette revue de l'état de la technique relative à la catalyse de déshydrogénocondensation entre un polyorganosiloxane à motif siloxyle ≡SiOH et un polyorganosiloxane à motif siloxyle ≡SiH, qu'il existe un besoin significatif pour :
1) trouver de nouveaux catalyseurs sans étain
2) diminuer la température d'activation du catalyseur, et
3) limiter les réactions secondaires.

Ainsi, l'un des objectifs essentiels de la présente invention est de proposer une composition silicone comprenant des composants porteurs de groupements ≡SiH/≡SiOH et polymérisable/réticulable par une réaction de déshydrogéno-condensation, en présence d'un catalyseur non toxique et ne contenant pas d'étain et nécessitant une faible température d'activation.

Un autre objectif essentiel de la présente invention est de fournir un procédé pour polymériser et/ou réticuler une composition du type de celle évoquée dans l'énoncé des objectifs ci-dessus ; ce procédé se devant d'être rapide économique et performant en termes de qualité de produit final obtenu.

Un autre objectif essentiel de l'invention est de fournir un procédé de réalisation d'au moins un revêtement anti-adhérent sur un support (de préférence souple), consistant à utiliser le procédé de réticulation/polymérisation ou de la composition mentionnée supra.

Un autre objectif essentiel de l'invention est de fournir un procédé de réalisation d'au moins un article en mousse silicone réticulée, consistant à utiliser le procédé de réticulation/polymérisation susvisé et/ou la composition mentionnée supra dans les objectifs, ce procédé permettant de contrôler le volume d'hydrogène gazeux dégagé et la qualité de l'élastomère formé.

Ces objectifs, parmi d'autres, sont atteints par la présente invention qui concerne tout d'abord une composition siloxanique **X** ne contenant pas de catalyseur métallique polymérisable et/ou réticulable par déshydrogénocondensation comprenant :
- au moins un monomère, oligomère et/ou polymère organosiloxane **B** ayant, par molécule, au moins un motif réactif ≡SiH ;
- au moins un monomère, oligomère et/ou polymère organosiloxane **C** présentant, par molécule, au moins un motif réactif ≡SiOH ;
- une quantité catalytiquement efficace d'au moins un catalyseur de déshydrogéno-condensation **A** qui est un composé organique non silylé et répondant à la formule générale (I): 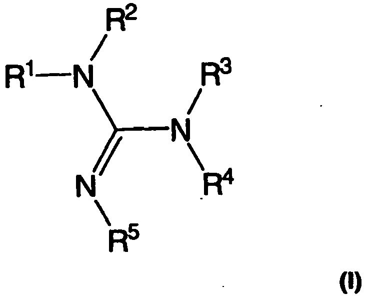 dans laquelle,
   - les radiaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine,
   - les radicaux R¹, R², R³ ou R⁴ peuvent être liés deux à deux de manière à former un cycle aliphatique à 3, 4, 5, 6 ou 7 chaînons éventuellement substitué par un ou plusieurs substituants, et
   - avec la condition supplémentaire que les radicaux R¹, R², R³, R⁴ et R⁵ ne comprennent pas d'atome de silicium,
- éventuellement au moins une résine polyorganosiloxanique **D** ; et
- éventuellement au moins une charge **E**.

Les composés non silylés selon l'invention et répondant à la formule générale **(I)** sont des guanidines pentasubstituées et présentent l'avantage d'être liquides, incolores, inodores et solubles dans les matrices silicones. Les guanidines non silylées selon l'invention sont mises en oeuvre dans les systèmes silicones à réticuler à des teneurs très faibles

La mise en oeuvre de tels composés même en faible quantité, permet de catalyser cette réaction de déshydrogénocondensation entre espèces siloxaniques comprenant des motifs ≡SiH et ≡SiOH, dans des conditions douces de température. Des réseaux ou des polymères silicones sont ainsi obtenus en quelques minutes, à température ambiante.

Les conformément à l'invention sont performants et économiques, notamment au regard des catalyseurs platiniques.

Selon un mode préféré de réalisation de l'invention le laquelle le catalyseur de déshydrogénocondensation **A** est un est un composé organique non silylé choisi parmi le groupe constitué par les composés **(A1)** à **(A4)** suivants:

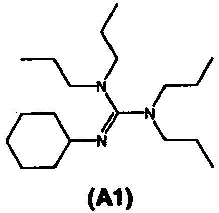

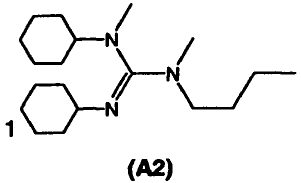

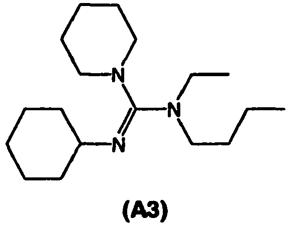

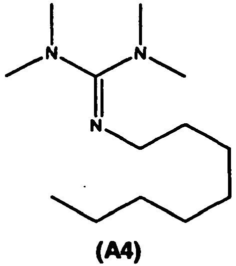

Ils sont également intéressants du fait qu'à faible concentration, ils ne nécessitent que de quantités limitées d'énergie pour activer la déshydrogénocondensation. En particulier, ils sont en effet activables dès la température ambiante.

Ils sont en particulier intéressants pour préparer des réseaux silicone élastomères dans des conditions douces et économiques. Les applications visées dans ce cas concernent notamment l'anti-adhérence papier où l'on souhaite remplacer les systèmes actuels par des systèmes moins onéreux et les mousses de silicones où l'on recherche à contrôler le dégagement d'hydrogène et la qualité du réseau. Pour la première application, il est préférable de contrôler la diffusion de l'hydrogène afin d'éviter la formation de bulles. Pour la seconde application, il faut gérer la taille des bulles, afin d'optimiser les propriétés de la mousse finale.

Ces résultats sont d'autant plus significatifs que la réactivité des espèces silicoxaniques, notamment pour former des produits non linéaires (réticulés), n'est pas très élevée si on la compare à celle des hydrogénosilanes et des alcools dans la déshydrogénocondensation.

Sur le plan quantitatif, le catalyseur **A** selon l'invention, est avantageusement présent dans une quantité variant entre 0.01 et 3 % en poids, de préférence entre 0.1 et 1% en poids par rapport au poids de la matière sèche en monomère, oligomère et/ou polymère organosiloxane à faire réagir.

De manière préférentielle, les monomères, oligomères et/ou polymères organosiloxanes **B** à motifs réactifs ≡SiH possèdent au moins un motif de formule **(II)** et sont terminés par des motifs de formule **(III)** ou sont des cycliques constitués de motifs de formule **(II)** représentées ci-dessous : 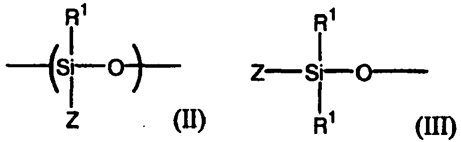 dans lesquelles :
- les symboles R¹, identiques ou différents et représentent :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z sont semblables ou différents et représentent :
   - un radical hydrogène, ou
   - un groupement R¹ avec la condition qu'il y a par molécule, au moins deux symboles Z représentent un atome d'hydrogène.

Selon un mode de réalisation préférentiel, les monomères, oligomères et/ou polymères organosiloxanes **C** -à motifs réactifs ≡SiOH possèdent au moins un motif de formule **(IV)** et sont terminés par des motifs de formule **(V)** ou cycliques constitués de motifs de formule **(IV)** représentées ci-dessous : 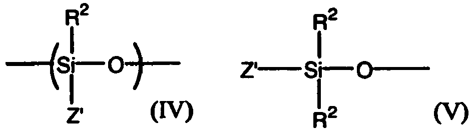 dans lesquelles :
- les symboles R², identiques ou différents et représentent :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone, et
- les symboles Z' sont semblables ou différents et représentent :
   ■ un groupement hydroxyle, ou
   ■ un groupement R² avec la condition que par molécule, au moins deux symboles Z représentant un groupement hydroxyle -OH.

Les espèces de type **B** et **C** peuvent également inclure dans leur structure des motifs dits (Q) ou (T) définis comme indiqué ci-après : 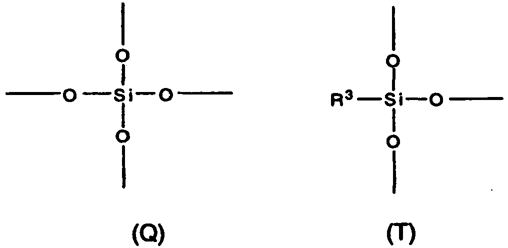 avec R³ pouvant représenter l'un des substituants proposés pour R¹ ou R².

Selon une variante avantageuse de l'invention, les polyorganosiloxanes B utilisés comportent de 1 à 50 motif(s) siloxyle(s) ≡SiH par molécule.

Selon une variante avantageuse de l'invention, les polyorganosiloxanes C utilisés comportent de 1 à 50 motifs siloxyle(s) ≡SiOH par molécule:

Sont notamment préférés à titre de dérivés **B** les monomères, ologoméres, polymères organosiloxane **B** à motif réactif ≡SiH répondent à la formule générale **(VI) :** 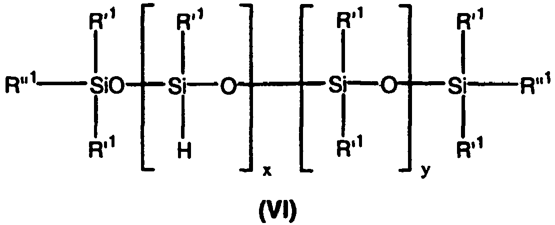 dans laquelle :
- x et y représentent chacun un nombre entier ou fractionnaire variant entre 0 et 200
- R'¹ et R"¹ représentent indépendamment l'un de l'autre :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trffluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement-sur la partie aryle, et
- R"¹ pouvant également correspondre à l'hydrogène, avec la condition selon laquelle que les radicaux R"¹ correspondent à l'hydrogène quand x = 0.

Sont notamment préférés à titre de dérivés **C** les monomères, oligombres, polymères organosiloxanes **C** à motif réactif ≡SiOH répondent à la formule générale (VII) : 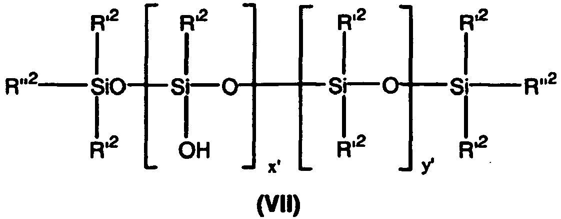 dans laquelle :
- x' et y' représente chacun un nombre entier ou fractionnaire variant entre 0 et 1200,
- R'² et R"² représentent indépendamment l'un de l'autre :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, ou
   - une partie aralkyle ayant une partie alkyle contenant entre 5 et 14 atomes de carbone et une partie aryle contenant entre 6 et 12 atomes de carbone, substituée éventuellement-sur la partie aryle,
- R"² pouvant également correspondre à OH, avec la condition selon laquelle les radicaux R"² correspondent à OH quand x' = 0.

Conviennent tout particulièrement à l'invention à titre de dérivés de silicone B les composés suivants : 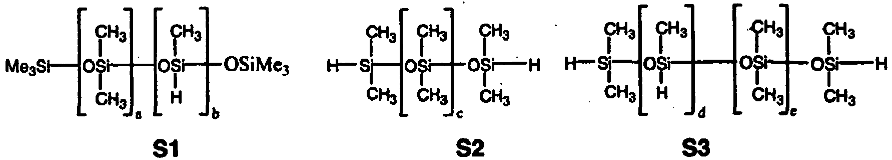 avec a, b, c, d et e représentant un nombre variant de :
- dans le polymère de formule **S1 :**
   0 ≤ a ≤ 150 de préférence 0 ≤ a ≤ 100 de préférence 0 ≤ a ≤ 20 et
   1≤ b ≤ 55 de préférence 10 ≤ b ≤ 55 de préférence 30 ≤ b ≤ 55
- dans le polymère de formule **S2 :**
   0≤ c ≤ 15
- dans le polymère de formule S3 :
   5≤ d ≤ 200 de préférence 20 ≤ d≤ 50 et
   2 ≤e≤ 50 de préférence 10 ≤e≤ 30.

Conviennent tout particulièrement à l'invention à titre de dérivés de silicone C les composés de formule **S4** suivante: 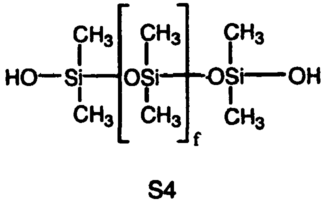 avec 1 ≤ f ≤ 1200 de préférence 50 ≤ f ≤ 400, et plus préférentiellement encore 150 ≤ f ≤ 250.

Dès lors que les espèces siloxaniques **B** et C sont des oligomères, des polymères, ils peuvent être décrits comme indiqué ci-après.

Le polyorganosiloxane **B** peut être linéaire (e.g. (VI)), ramifié ou cyclique. Pour des raisons économiques, sa viscosité est de préférence inférieure à 100 mPa.s ; les radicaux organiques identiques ou différents sont de préférence méthyle, éthyle et/ou phényle. Lorsque celui-ci est linéaire, les atomes d'hydrogène des fonctions ≡SiH sont liés directement aux atomes de silicium situés en bout(s) de chaîne et/ou dans la chaîne.

**A** titre d'exemple de constituant **B** linéaire, on peut citer les polyméthylhydrogénosiloxanes à extrémités triméthylsiloxyl et/ou hydrogénodiméthylsiloxy.

Parmi les polymères cycliques, peuvent être cités ceux répondant aux formules suivantes :
[OSi(CH₃)H]₄; [OSi(CH₃)H]₅; [OSi(CH₃)H]₃ [OSi(CH₃)H]₈; [OSi(C₂H₅)H]₃.

Le constituant C peut présenter une viscosité pouvant atteindre 200 000 mPa.s. Pour des raisons économiques, on choisit un constituant dont la viscosité est généralement de l'ordre de 20 à 10 000 mPa.s.

Les groupes organiques identiques ou différents généralement présents dans les constituants **C**, huiles ou gommes α,ω-hydroxylées, sont les radicaux méthyle, éthyle, phényle, trifluoropropyle. De préférence, au moins 80 % en nombre desdits groupes organiques sont des groupes méthyles liés directement aux atomes de silicium. Dans le cadre de la présente invention, on préfère plus spécialement les α,ω-bis (hydroxy)polydiméthylsiloxanes.

Le polyorganosilxane **C** peut-être une résine. Les résines **C** à fonctions silanol présentent par molécule au moins un des motifs R'SiO_{½}(motif M) et R'²SiO_{2/2} (motif D), en association avec au moins un des motifs R'SiO_{3/2} (motif T) et SiO_{4/2} (motif Q). Les radicaux R' généralement présents sont méthyle, éthyle, isopropyle, tertiobutyle et n-hexyle. Comme exemples de résines, on peut citer les résines MQ(OH), MDO(OH), TD(OH) et MDT(OH).

Il est possible de mettre en oeuvre des solvants des polyroganosiloxanes **B** ou **C** de façon à régler la viscosité de la composition. **A** titre d'exemples de tels solvants classiques de polymères silicones, on peut citer les solvants de type aromatique tels que xylène et toluène, les solvants alphatiques saturés tels que hexane, heptane, whitespirit®, tétrahydrofurane et diéthyléther, les solvants chlorés tels que chlorure de méthylène et perchloroéthylène. Dans le cadre de la présente invention, on préférera toutefois ne pas utiliser de solvant.

Le ratio molaire ≡SiH/≡SiOH est avantageusement compris entre 1 et 100, de préférence entre 10 et 50 et, plus préférentiellement encore entre 15 et 45.

La composition selon l'invention peut également comprendre une ou plusieurs résines polyorganosiloxanes **D**. Ces résines sont des oligomères ou polymères polyorganosiloxanes ramifiés bien connus et disponibles dans le commerce. Elles sont présentes sous la forme de solutions, de préférence siloxaniques. Elles présentent, dans leur structure, au moins deux motifs différents choisis parmi ceux de formule:
R'³SiO_{1/2} (motif M), R'²SiO_{2/2} (motif D), R'SiO_{3/2} (motif T) et SiO_{4/2} (motif Q), avec l'un au moins de ces motifs étant un motif T ou Q.

Les radicaux R' sont identiques ou différents et sont choisis parmi les radicaux alkyles linéaires ou ramifiés en C₁-C₆, les radicaux alcényles en C₂-C₄ phényle ou trifluoro-3,3,3 propyle.

On peut citer par exemple : comme radicaux R' alkyles, les radicaux méthyle, éthyle, isopropyle, tertiobutyle et n-hexyle, et comme radicaux R alcényles, les radicaux vinyles.

On doit comprendre que dans les résines polyorganosiloxanes **D** du type précité, une partie des radicaux R' sont des radicaux alcényles.

Comme exemples d'oligomères ou de polymères organopolysiloxanes ramifiés D, on peut citer les résines MQ, les résines MDQ, les résines TD et les résines MDT, les fonctions alcényles pouvant être portées par les motifs M, D et/ou T. Comme exemples de résines -E- qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.

Cette résine **D** est avantageusement présente dans une concentration comprise entre 5 et 70 % en poids par rapport à l'ensemble des constituants de la composition, de préférence entre 10 et 60 % en poidset, plus préférentiellement encore, entre 20 et 60 % en poids.

La composition selon l'invention peut également contenir une charge E de préférence minérale et choisie parmi les matières siliceuses ou non. Quand il s'agit de matières siliceuses, elles peuvent jouer le rôle de charge renforçante ou semi-renforçante. Les charges siliceuses renforçantes sont choisies parmi les silices colloïdales, les poudres de silice de combustion et de précipitation ou leur mélange.

Ces poudres présentent une taille moyenne de particule généralement inférieure à 0,1 µm et une surface spécifique BET supérieure à 50 m²/g, de préférence comprise entre 100 et 300 m²/g.

Les charges siliceuses semi-renforçantes telles que des terres de diatomées ou du quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 µm et une surface BET inférieure à 100 m²/g.

De façon pratique mais non limitative, la charge employée est une silice.

La charge peut être traitée à l'aide de tout agent de compatibilisation approprié et notamment l'hexaméthyldisilazane. Pour plus de détails à cet égard, on peut se référer par exemple au brevet FR-B-2 764 894.

Sur le plan pondéral, on préfère mettre en oeuvre une quantité de charge comprise entre 5 et 30% et de préférence entre 7 et 20 % en poids par rapport à l'ensemble des constituants de la préparation.

Naturellement, la composition peut être enrichie à l'aide de toutes sortes d'additifs selon les applications finales visées.

Dans l'application anti-adhérence sur supports souples (papier ou film polymère), la composition peut comprendre un système modulateur d'adhérence sélectionné parmi les systèmes connus. Il peut s'agir de ceux décrits dans le brevet français FR-B-2 450 642, le brevet US-B-3,772,247 ou la demande de brevet européen EP-A-0 601 938.

D'autres additifs fonctionnels de cette composition, peuvent être des bactéricides, des photosensibilisateurs, des fongicides, des inhibiteurs de corrosion, des agents antigels, des agents de mouillage, des antimousses, des latex synthétiques, des colorants ou des acidifiants.

Parmi les additifs classiques, on peut citer également les promoteurs d'adhérents tels que par exemple ceux comprenant au moins un organosilane alcoxylé, au moins un composé organosilicié époxydé, et au moins un chélate de métal et/ou un alcoxyde métallique par exemple
- Vinyle TriMéthoxySilane ou VTMO
- GLYcidoxypropyltriMéthOxysilane) ou GLYMO, et
- titanate de tertiobutyle ou TBOT.

Cette composition peut être une solution ou une émulsion. Dans ce dernier cas, elle peut comporter alors au moins un tensioactif et éventuellement au moins un agent de fixation du pH tel que HCO₃⁻/CO₃²⁻ et/ou H₂PO₄⁻/HPO₄²⁻.

Un autre moyen de définition de l'invention consiste à l'appréhender sous l'angle de l'utilisation d'au moins un catalyseur **A** selon l'invention et tel que défini ci-dessus pour la déshydrogénocondensation entre, d'une part, au moins un monomère, oligomère et/ou polymère organosiloxane **B** ayant, par molécule, au moins un motif réactif ≡SiH et, d'autre part, au moins un monomère, oligomère et/ou polymère organosiloxane **C** présentant, par molécule, au moins un motif réactif ≡SiOH.

Selon un autre de ses aspects, la présente invention concerne un procédé pour polymériser et/ou réticuler une composition siloxanique **X** selon l'invention et telle que définie ci-dessus caractérisé en ce que l'on effectue une réaction de déshydrogénocondensation entre lesdits composés **B** et **C** et en ce que ladite déshydrogénocondensation est initiée par le catalyseur **A** selon l'invention et tel que défini ci-dessus.

Deux modes de réalisation sont possibles pour l'ajout du catalyseur conforme à l'invention.

Celui-ci peut soit être ajouté au mélange des composés **B** et **C**, par exemple des polymères du type S1, S2 ou S3 avec un polymère du type S4, soit, de préférence, être au préalable mélangé avec le composé **C**, par exemple le polymère du type S4, avant d'être mis en présence du composé **B**, par exemple le polymère S1 ou S2 ou S3.

Quelle que soit la variante considérée, le catalyseur peut être mis en oeuvre tel quel ou en solution dans un solvant.

Généralement, les mélanges sont réalisés sous agitation à température ambiante.

La solution de catalyseur peut par exemple être utilisée pour préparer un bain avec le ou les monomères, oligomères et/ou polymères à polymériser et/ou réticuler par déshydrogénocondensation, de manière à ce que la concentration du ou des catalyseurs présents soit comprise entre 0,01 et 5% en poids dans ledit bain, et de préférence entre 0,05 et 0,5%.

La préparation de la composition silicone selon l'invention, utilisable notamment comme base d'enduction pour la réalisation de revêtements anti-adhérents à caractère hydrofuge s'effectue à l'aide des moyens et selon les méthodologies de mélanges bien connues de l'homme de l'art qu'il s'agisse de compositions avec ou sans solvants ou d'émulsions.

L'invention concerne également un procédé de réalisation d'au moins un revêtement anti-adhérent sur un support, de préférence souple, caractérisé en ce qu'il consiste essentiellement à appliquer sur ce support une composition siloxanique **X** selon l'invention et telle que définie ci-dessus, puis à laisser réticuler la composition siloxanique **X** éventuellement après activation thermique jusqu'à une température de 110°C.

Conformément à ce procédé, les compositions peuvent être appliquées à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés à 100-110°C.

Lesdites compositions peuvent être déposées sur tout matériau ou substrat souple tel que papiers de types divers (supercalendré, couché, glassine), cartons, feuilles de cellulose, feuilles en métal, films de matière plastique (polyester, polyéthylène, polypropylène...).

Les quantités de compositions déposées sont de l'ordre de 0,5 à 2 g par m² de surface à traiter, ce qui correspond au dépôt de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Les supports souples revêtus d'un film silicone anti-adhérent peuvent être par exemple:
- un ruban adhésif dont la face interne est enduite d'une couche d'adhésif sensible à la pression et dont la face externe comporte le revêtement silicone anti-adhérent ;
- ou un papier ou un film polymère de protection de la face adhésive d'un élément autocollant ou adhésif sensible à la pression ;
- ou un film polymère du type polychlorure de vinyle (PVC), Polypropylène, Polyéthylène ou Polyéthylènetéréphtalate.

Un autre objet de l'invention concerne un procédé de réalisation d'au moins un article en mousse silicone réticulée, caractérisé en ce qu'il consiste essentiellement à faire réticuler une composition telle que définie ci-dessus, en mettant en oeuvre de préférence des POS A et B tels que définis ci-dessus, en faisant en sorte qu'au moins une partie de l'hydrogène gazeux formé ne soit pas évacuée du milieu réactionnel.

Les compositions selon l'invention sont utiles dans le domaine des revêtements anti-adhérents sur les peintures, de l'encapsulation de composants électriques et électroniques, des revêtements pour textiles, ainsi que dans le domaine du gainage de fibres optiques.

L'invention a également pour objet tous revêtements obtenus par réticulation et/ou polymérisation de la composition siloxanique **X** selon l'invention et telle que définie ci-dessus. Ces revêtements peuvent être de type vernis, revêtement adhésif, revêtement anti-adhérent et/ou encre.

L'invention vise également :
- tous articles constitués d'un matériau solide dont une surface au moins est revêtue de la composition siloxanique **X** susvisée réticulée et/ou polymérisée thermiquement ;
- ainsi que la mousse silicone réticulée obtenue par réticulation d'une composition siloxanique **X** susvisé.

### EXEMPLES :

### I) Préparation des catalyseurs selon l'invention

### I) Préparation des catalyseurs selon l'invention

### (A-2) : 1-butyl-2,3-dicyclohexyl-1,3-diméthylguanidine

A une solution de 19.12 g de N-méthyl-N-cyclohexylamine (0.169 mol) dans 160 ml d'hexane est ajouté goutte à goutte 18.38 g d'isocyanate de cyclohexyle ·(0.147 mol) puis le mélange trouble est chauffé 2h à reflux, puis évaporé à sec pour donner 35 g de N,N'-dicyclohexyl-N-méthylurée brute. A une suspension de 17 g de celle-ci (71.33 mmol) dans 65 ml de toluène sec est ajouté 12 g de POCl₃ (78 mmol) sur 1h, puis après quelques heures à 20°C, 15.5 g de N-butyl-N-méthylamine (0.178 mmol) sont ajoutés sur 2h, puis après 2h supplémentaires à 20°C, 50 ml d'eau sont ajoutés. 49 g de soude à 35% sont alors ajoutés en refroidissant, puis le milieu biphasique est extrait par de l'éther diisopropylique. Après séchage et évaporation à sec, l'huile obtenue, 26.5 g, est distillée à 180°C sous 1 mbar pour donner 21.25 g de la guanidine attendue (rendement 97%).

### (A-3) : N-butyl-N'-cyclohexyl-N-éthylpipéridine-1-carboxamidine

A une solution de 18.62 g de pipéridine (0.219 mol) dans 360 ml d'hexane est ajouté goutte à goutte 23.8 g d'isocyanate de cyclohexyle (0.190 mol) puis le mélange trouble est chauffé 2h à reflux, puis refroidi et filtré pour donner 39.3 g de N-cyclohexylpipéridine-1-carboxamide pure (rdt 98.3 %). A une suspension de 15.05 g de celle-ci (71.6 mmol) dans 65 ml de toluène sec est ajouté 12 g de POCl₃ (78 mmol) sur 1h, puis après quelques heures à 20°C, 18.1 g de N-butyl-N-éthylamine (0.179 mmol) sont ajoutés sur 2h, puis après 2h supplémentaires à 20°C, 50 ml d'eau sont ajoutés. 49 g de soude à 35% sont alors ajoutés en refroidissant, puis le milieu biphasique est extrait par de l'éther diisopropylique. Après séchage et évaporation à sec, l'huile obtenue, 20 g, est distillée à 185°C sous 1 mbar pour donner 17 g de la guanidine attendue (rendement 81%).

### II) Mise en évidence de la réactivité des guanidines selon l'invention

Les polymères polyorganosiloxanes utilisés sont les suivants : 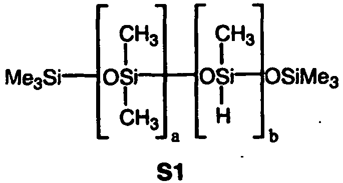 avec 0 ≤ a ≤ 20 et 30 ≤ b ≤ 55 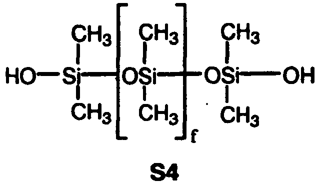 avec 150 ≤ f ≤ 250.

Les tests préliminaires ont été réalisés sur les mélanges stoechiométriques d'huile polydiméthylsixane à fonction ≡SiOH boût de chaîne linéaire de formule S4 (2g, viscosité de 100 mPa.s) et d'une huile poly(diméthyl)(hydrogéno)(méthyl)siloxane à motif ≡SiH ramifiée de formule S1 (0,25g) agités par un barreau magnétique et en présence des catalyseurs potentiels. Les durées d'arrêt de l'agitation indiquant la réticulation des mélanges ont été comparées à 1% en poids de catalyseur.

**TABLEAU I**

| Catalyseurs testés | Temps de prise en masse en mn T°= 20°C |
|---|---|
| **A1** (teneur molaire 0,071 mM) | 5 mn |
| **A2** (teneur molaire 0,071 mM) | 8 mn |

Ainsi les alkylguanidines 1pentasubstitués selon l'invention peuvent avantageusement remplacer les catalyseurs à base d'étain et les catalyseurs à base de platine très onéreux dans la réaction de déshydrogènocondensation, et cela à des teneurs très faibles.

## Revendications

1. Composition siloxanique X ne contenant pas de catalyseur métallique polymérisable et/ou réticulable par déshydrogéno-condensation comprenant :
- au moins un monomère, oligomère et/ou polymère organosiloxane B ayant, par molécule, au moins un motif réactif ≡SiH ;
- au moins un monomère, oligomère et/ou polymère organosiloxane C présentant, par molécule, au moins un motif réactif ≡SiOH ;
- une quantité catalytiquement efficace d'au moins un catalyseur de déshydrogéno-condensation A qui est un composé organique non silylé et répondant à la formule générale (1): 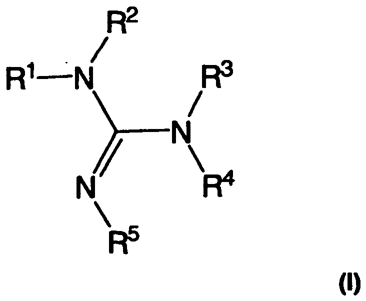 dans laquelle,
- les radicaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine,
- les radicaux R¹, R², R³ ou R⁴ peuvent être liés deux à deux de manière à former un cycle aliphatique à 3, 4, 5, 6 ou 7 chaînons éventuellement substitué par un ou plusieurs substituants,.et
- avec la condition supplémentaire que les radicaux R¹, R², R³, R⁴ et R⁵ ne comprennent pas d'atome de silicium,
- éventuellement au moins une résine polyorganosiloxanique **D ;** et
- éventuellement au moins une charge **E.**

2. Composition selon la revendication 1 dans laquelle le catalyseur de déshydrogéno-condensation A est un est un composé organique non silylé choisi parmi le groupe constitué par les composés (A1) à (A4) suivants:

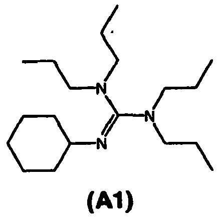

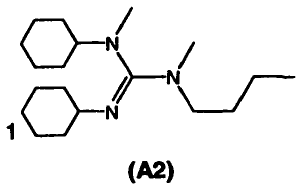

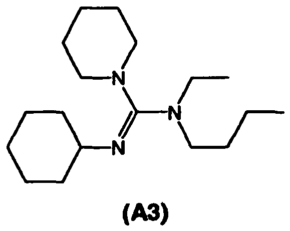

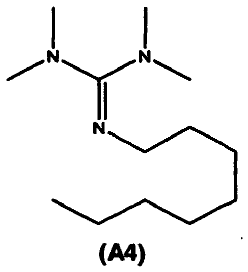

3. Composition selon l'une des revendications précédentes, **caractérisée en ce que** les monomères, oligomères et/ou polymères organosiloxanes **B** à motifs réactifs ⁻SiH possèdent au moins un motif de formule (II) et sont terminés par des motifs de formule (III) ou cycliques constitués de motifs de formule (II) représentées ci-dessous : 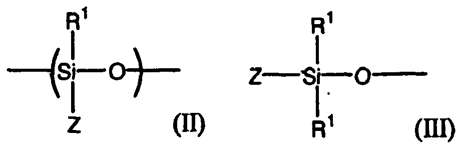 dans lesquelles :
- les symboles R¹, identiques ou différents et représentent :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone éventuellement substitué, ou
• une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z sont semblables ou différents et représentent :
• un radical hydrogène, ou
• un groupement R¹ avec la condition que par molécule, au moins deux symboles Z représentant un atome d'hydrogène.

4. Composition selon l'une des revendications précédentes, **caractérisée en ce que** les monomères, oligomères et/ou polymères organosiloxanes **C** -à motifs réactifs ≡SiOH possèdent au moins un motif de formule **(IV)** et sont terminés par des motifs de formule **(V)** ou cycliques constitués de motifs de formule **(IV)** représentées ci-dessous : 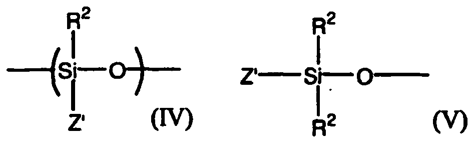 dans lesquelles :
- les symboles R², identiques ou différents et représentent :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone éventuellement substitué, ou
• une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone, et
- les symboles Z' sont semblables ou différents et représentent :
■ un groupement hydroxyle, ou
■ un groupement R² avec la condition que par molécule, au moins deux symboles Z représentant un groupement hydroxyle -OH.

5. Composition selon l'une des revendications précédentes, **caractérisée en ce que** les monomères, oligomères, polymères organosiloxanes **B** à motif réactif ≡SiH répondent à la formule générale **(VI) :** 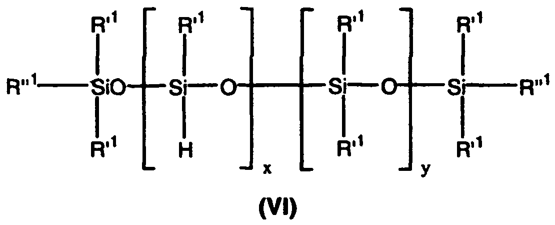 dans laquelle :
- x et y représentent chacun un nombre entier ou fractionnaire variant entre 0 et 200
- R'¹ et R"¹ représentent indépendamment l'un de l'autre :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone éventuellement substitué, ou
• une partie aralkyle ayant une partie alkyle contenant entre 5 et 14 atomes de carbone et une partie aryle contenant entre 6 et 12 atomes de carbone, substituée éventuellement-sur la partie aryle; et
- R"¹ pouvant également correspondre à l'hydrogène, avec la condition selon laquelle que les radicaux R"¹ correspondent à l'hydrogène quand x = 0.

6. Composition selon l'une des revendications précédentes, **caractérisée en ce que** les monomères, oligomères, polymères organosiloxanes C à motif réactif ≡SiOH répondent à la formule générale (VII) : 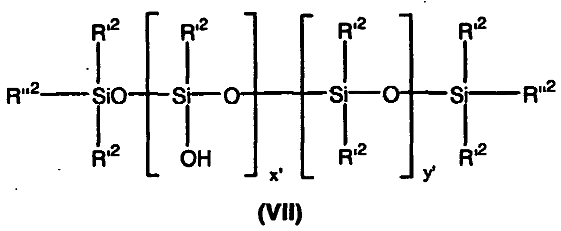 dans laquelle :
- x' et y' représente chacun un nombre entier ou fractionnaire variant entre 0 et 1200,
- R'² et R"² représentent indépendamment l'un de l'autre :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone éventuellement substitué, ou
• une partie aralkyle ayant une partie alkyle contenant entre 5 et 14 atomes de carbone et une partie aryle contenant entre 6 et 12 atomes de carbone, substituée éventuellement-sur la partie aryle,
- R"² pouvant également correspondre à OH, avec la condition selon laquelle les radicaux R"² correspondent à OH quand x' = 0.

7. Utilisation d'au moins un catalyseur **A** tel que défini selon l'une quelconque des revendications 1 à 2 pour la déshydrogénocondensation entre, d'une part, au moins un monomère, oligomère et/ou polymère organosiloxane **B** ayant, par molécule, au moins un motif réactif ≡SiH et, d'autre part, au moins un monomère, oligomère et/ou polymère organosiloxane **C** présentant, par molécule, au moins un motif réactif ≡SiOH.

8. Procédé pour polymériser et/ou réticuler une composition siloxanique **X** telle que définie selon l'une quelconque des revendications 1 à 6 **caractérisé en ce que** l'on effectue une réaction de déshydrogénocondensation entre lesdits composés **B** et **C** et **en ce que** ladite déshydrogénocondensation est initiée par le catalyseur **A** tel que défini selon l'une quelconque des revendications 1 à 2.

9. Procédé de réalisation d'au moins un revêtement anti-adhérent sur un support, de préférence souple, **caractérisé en ce qu'**il consiste essentiellement à appliquer sur ce support une composition siloxanique **X** telle que définie selon l'une quelconque des revendications 1 à 6, puis à laisser réticuler la composition siloxanique **X** éventuellement après activation thermique jusqu'à une température de 50°C.

10. Procédé de réalisation d'au moins un article en mousse silicone réticulée, **caractérisé en ce qu'**il consiste essentiellement à faire réticuler une composition siloxanique **X** telle que définie selon l'une quelconque des revendications 1 à 6, en faisant en sorte qu'au moins une partie de l'hydrogène gazeux formé ne soit pas évacué du milieu réactionnel.

11. Revêtement obtenu par réticulation et/ou polymérisation de la composition siloxanique **X** telle que définie selon l'une quelconque des revendications 1 à 6.

12. Article constitué d'un matériau solide dont une surface au moins est revêtue de la une composition siloxanique **X** telle que définie selon l'une quelconque des revendications 1 à 6 réticulée et/ou polymérisée thermiquement.

13. Mousse en silicone réticulée obtenue par réticulation d'une une composition siloxanique **X** telle que définie selon l'une quelconque des revendications 1 à 6.

## Patentansprüche

1. Siloxanzusammensetzung **X**, die keinen Metallkatalysator enthält und durch Dehydrokondensation polymerierbar und/oder vernetzbar ist, umfassend:
- mindestens ein Organosiloxanmonomer, -oligomer und/oder -polymer **B**, das pro Molekül mindestens eine reaktive ≡SiH-Gruppierung aufweist;
- mindestens ein Organosiloxanmonomer, -oligomer und/oder -polymer **C**, das pro Molekül mindestens eine reaktive ≡SiOH-Gruppierung aufweist;
- eine katalytisch wirksame Menge mindestens eines Dehydrokondensationskatalysators **A**, bei dem es sich um eine nichtsilylierte organische Verbindung der allgemeinen Formel (I) handelt: 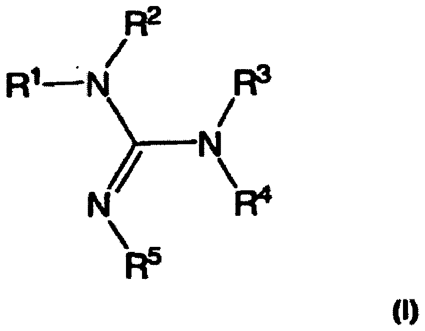 worin
- die Reste R¹, R², R³, R⁴ oder R⁵ gleich oder verschieden sind und unabhängig voneinander für eine lineare oder verzweigte einwertige Alkylgruppe, eine Cycloalkylgruppe oder eine (Cycloalkyl)alkylgruppe, wobei der Ring substituiert oder unsubstituiert ist und mindestens ein Heteroatom oder eine Fluoralkylgruppe enthalten kann, eine aromatische Gruppe, eine Arylalkylgruppe, eine Fluoralkylgruppe, eine Alkylamingruppe oder eine Alkylguanidingruppe stehen,
- die Reste R¹, R², R³ oder R⁴ paarweise so verbunden sein können, dass sie einen 3-, 4-, 5-, 6- oder 7-gliedrigen aliphatischen Ring bilden, der gegebenenfalls durch einen oder mehrere Substituenten substituiert ist, und
- mit der zusätzlichen Maßgabe, dass die Reste R¹, R², R³, R⁴ oder R⁵ kein Siliciumatom enthalten,
- gegebenenfalls mindestens ein Polyorganosiloxanharz **D** und
- gegebenenfalls mindestens einen Füllstoff **E**.

2. Zusammensetzung nach Anspruch 1, wobei es sich bei dem Dehydrokondensationskatalysator **A** um eine nichtsilylierte organische Verbindung handelt, die aus der Gruppe bestehend aus den folgenden Verbindungen **(A1)** bis **(A4)** ausgewählt ist:

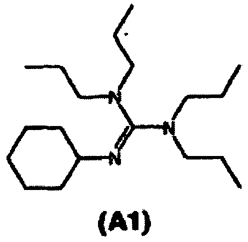

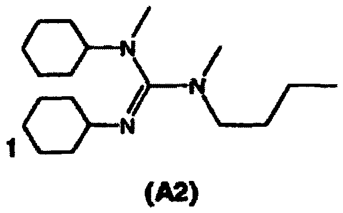

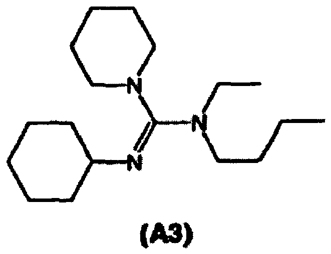

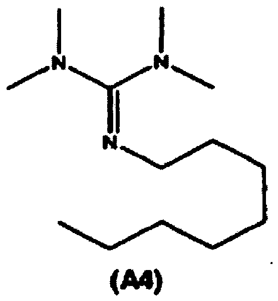

3. Zusammensetzung nach einem der vorhergehenden Ansprüche, **dadurch gekennzeichnet, dass** die Organosiloxanmonomere, -oligomere und/oder -polymere **B** mit reaktiven ≡SiH-Gruppierungen mindestens eine Gruppierung der Formel **(II)** aufweisen und durch Gruppierungen der Formel **(III)** terminiert sind oder cyclische Einheiten sind, welche aus Gruppierungen der Formel **(II)** bestehen, wobei diese Formeln nachstehend wiedergegeben sind: 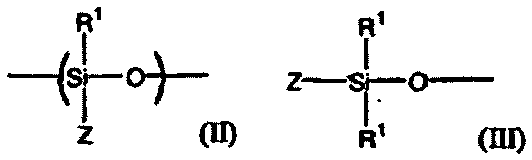 worin:
- die Symbole R¹ gleich oder verschieden sind und für:
• einen linearen oder verzweigten Alkylrest mit 1 bis 8 Kohlenstoffatomen, der gegebenenfalls durch mindestens ein Halogen, vorzugsweise Fluor, substituiert ist, wobei der Alkylrest vorzugsweise Methyl, Ethyl, Propyl, Octyl und 3,3,3-Trifluorpropyl ist,
• einen gegebenenfalls substituierten Cycloalkylrest mit zwischen 5 und 8 Ringkohlenstoffatomen,
• einen gegebenenfalls substituierten Arylrest mit zwischen 6 und 12 Kohlenstoffatomen oder
• einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil durch Halogene, Alkylgruppen und/oder Alkoxygruppen mit 1 bis 3 Kohlenstoffatomen substituiert ist,
stehen,
- die Symbole Z gleich oder verschieden sind und für:
• einen Wasserstoffrest oder
• eine Gruppe R¹
stehen, mit der Maßgabe, dass pro Molekül mindestens zwei Symbole Z für ein Wasserstoffatom stehen.

4. Zusammensetzung nach einem der vorhergehenden Ansprüche, **dadurch gekennzeichnet, dass** die Organosiloxanmonomere, -oligomere und/oder -polymere **C** mit reaktiven ≡SiOH-Gruppierungen mindestens eine Gruppierung der Formel **(IV)** aufweisen und durch Gruppierungen der Formel **(V)** terminiert sind oder cyclische Einheiten sind, welche aus Gruppierungen der Formel **(IV)** bestehen, wobei diese Formeln nachstehend wiedergegeben sind: 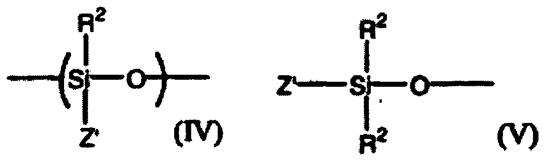 worin:
- die Symbole R² gleich oder verschieden sind und für:
• einen linearen oder verzweigten Alkylrest mit 1 bis 8 Kohlenstoffatomen, der gegebenenfalls durch mindestens ein Halogen, vorzugsweise Fluor, substituiert ist, wobei der Alkylrest vorzugsweise Methyl, Ethyl, Propyl, Octyl und 3,3,3-Trifluorpropyl ist,
• einen gegebenenfalls substituierten Cycloalkylrest mit zwischen 5 und 8 Ringkohlenstoffatomen,
• einen gegebenenfalls substituierten Arylrest mit zwischen 6 und 12 Kohlenstoffatomen oder
• einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil durch Halogene, Alkylgruppen und/oder Alkoxygruppen mit 1 bis 3 Kohlenstoffatomen substituiert ist,
stehen,
- die Symbole Z' gleich oder verschieden sind und für:
• eine Hydroxylgruppe oder
• eine Gruppe R²
stehen, mit der Maßgabe, dass pro Molekül mindestens zwei Symbole Z für eine Hydroxylgruppe -OH stehen.

5. Zusammensetzung nach einem der vorhergehenden Ansprüche, **dadurch gekennzeichnet, dass** die Organosiloxanmonomere, -oligomere und/oder -polymere **B** mit reaktiver ≡SiH-Gruppierung der allgemeinen Formel **(VI)** entsprechen: 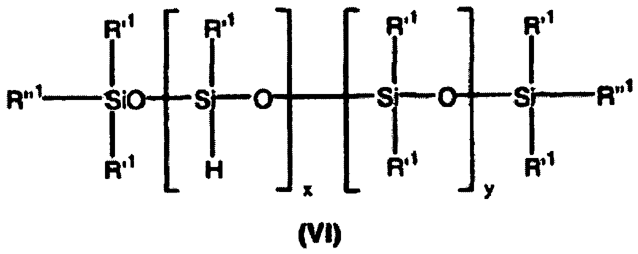 worin:
- x und y jeweils für eine ganze oder gebrochene Zahl im Bereich zwischen 0 und 200 stehen und
- R'¹ und R"¹ jeweils unabhängig voneinander für:
• einen linearen oder verzweigten Alkylrest mit 1 bis 8 Kohlenstoffatomen, der gegebenenfalls durch mindestens ein Halogen, vorzugsweise Fluor, substituiert ist, wobei der Alkylrest vorzugsweise Methyl, Ethyl, Propyl, Octyl und 3,3,3-Trifluorpropyl ist,
• einen gegebenenfalls substituierten Cycloalkylrest mit zwischen 5 und 8 Ringkohlenstoffatomen,
• einen gegebenenfalls substituierten Arylrest mit zwischen 6 und 12 Kohlenstoffatomen oder
• einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil substituiert ist,
stehen und
- R"¹ auch einem Wasserstoff entsprechen kann, mit der Maßgabe, gemäß der die Reste R"¹ Wasserstoff entsprechen, wenn x = 0.

6. Zusammensetzung nach einem der vorhergehenden Ansprüche, **dadurch gekennzeichnet, dass** die Organosiloxanmonomere, -oligomere und/oder -polymere **C** mit reaktiver ≡SiOH-Gruppierung der allgemeinen Formel **(VII)** entsprechen: 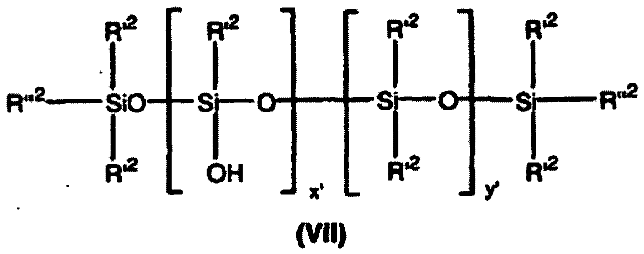 worin:
- x' und y' jeweils für eine ganze oder gebrochene Zahl im Bereich zwischen 0 und 1200 stehen und
- R'² und R"² jeweils unabhängig voneinander für:
• einen linearen oder verzweigten Alkylrest mit 1 bis 8 Kohlenstoffatomen, der gegebenenfalls durch mindestens ein Halogen, vorzugsweise Fluor, substituiert ist, wobei der Alkylrest vorzugsweise Methyl, Ethyl, Propyl, Octyl und 3,3,3-Trifluorpropyl ist,
• einen gegebenenfalls substituierten Cycloalkylrest mit zwischen 5 und 8 Ringkohlenstoffatomen,
• einen gegebenenfalls substituierten Arylrest mit zwischen 6 und 12 Kohlenstoffatomen oder
• einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil substituiert ist,
stehen, wobei
- R"² auch OH entsprechen kann, mit der Maßgabe, gemäß der die Reste R"² OH entsprechen, wenn x' = 0.

7. Verwendung mindestens eines Katalysators **A** gemäß einem der Ansprüche 1 bis 2 zur Dehydrokondensation zwischen einerseits mindestens einem Organosiloxanmonomer, -oligomer und/oder -polymer **B**, das pro Molekül mindestens eine reaktive ≡SiH-Gruppierung aufweist, und andererseits mindestens einem Organosiloxanmonomer, -oligomer und/oder -polymer **C**, das pro Molekül mindestens eine reaktive ≡SiOH-Gruppierung aufweist.

8. Verfahren zur Polymerisation und/oder Vernetzung einer Siloxanzusammensetzung **X** gemäß einem der Ansprüche 1 bis 6, **dadurch gekennzeichnet, dass** man eine Dehydrokondensation zwischen den Verbindungen **B und C** durchführt und die Dehydrokondensation durch den Katalysator **A** gemäß einem der Ansprüche 1 bis 2 initiiert.

9. Verfahren zur Herstellung mindestens einer Antihaftbeschichtung auf einem Träger, vorzugsweise einem flexiblen Träger, **dadurch gekennzeichnet, dass** es im Wesentlichen daraus besteht, dass man auf das Substrat eine Siloxanzusammensetzung **X** gemäß einem der Ansprüche 1 bis 6 aufbringt und dann die Siloxanzusammensetzung **X** vernetzen lässt, gegebenenfalls nach thermischer Aktivierung bis zu einer Temperatur von 50°C.

10. Verfahren zur Herstellung mindestens eines Gegenstands aus vernetztem Silikonschaumstoff, **dadurch gekennzeichnet, dass** es im Wesentlichen daraus besteht, dass man eine Siloxanzusammensetzung **X** gemäß einem der Ansprüche 1 bis 6 vernetzen lässt, wobei man dafür sorgt, dass ein Teil des gebildeten gasförmigen Wasserstoffs nicht aus dem Reaktionsmedium ausgetragen wird.

11. Beschichtung, erhalten durch Vernetzung und/oder Polymerisation der Siloxanzusammensetzung **X** gemäß einem der Ansprüche 1 bis 6.

12. Gegenstand, bestehend aus einem festen Material, dessen Oberfläche mit einer thermisch vernetzten und/oder polymerisierten Siloxanzusammensetzung **X** gemäß einem der Ansprüche 1 bis 6 beschichtet ist.

13. Vernetzter Silikonschaumstoff, erhalten durch Vernetzung einer Siloxanzusammensetzung **X** gemäß einem der Ansprüche 1 bis 6.

## Claims

1. Siloxane composition X which does not contain any metal catalyst and which can be polymerized and/or crosslinked by dehydrogenative condensation, comprising:
- at least one organosiloxane monomer, oligomer and/or polymer B having, per molecule, at least one reactive ≡SiH unit;
- at least one organosiloxane monomer, oligomer and/or polymer C having, per molecule, at least one reactive ≡SiOH unit;
- a catalytically effective amount of at least one dehydrogenative condensation catalyst A which is a nonsilylated organic compound corresponding to general formula (I): 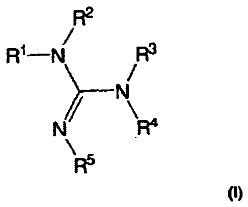 in which:
- the R1, R2, R3, R4 or R5 radicals, which may be identical or different, represent, independently of one another, a linear or branched monovalent alkyl group, a cycloalkyl group or a (cycloalkyl)alkyl group, the ring being substituted or unsubstituted and being able to comprise at least one heteroatom or a fluoroalkyl group, an aromatic group, an arylalkyl group, a fluoroalkyl group, or an alkylamine or alkylguanidine group,
- the R1, R2, R3 or R4 radicals can be linked in pairs so as to form a 3-, 4-, 5-, 6- or 7-membered aliphatic ring optionally substituted with one or more substituents, and
- with the additional condition that the R1, R2, R3, R4 and R5 radicals do not comprise a silicon atom,
- optionally at least one polyorganosiloxane resin D; and
- optionally at least one filler E.

2. Composition according to Claim 1, in which the dehydrogenative condensation catalyst A is a nonsilylated organic compound chosen from the group consisting of the following compounds (A1) to (A4):

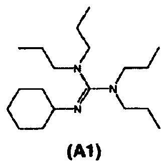

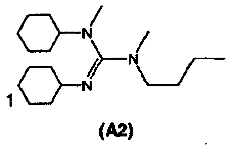

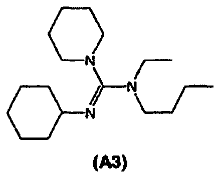

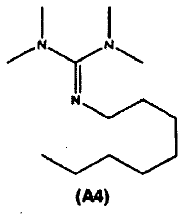

3. Composition according to one of the preceding claims, **characterized in that** the organosiloxane monomers, oligomers and/or polymers B possessing reactive ≡SiH units have at least one unit of formula (II) and end with units of formula (III) or are cyclic entities consisting of units of formula (II), these formulae being represented below: 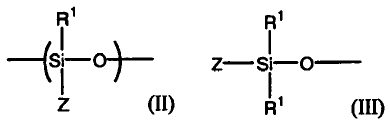 in which:
- the symbols R1 are identical or different and represent:
• a linear or branched alkyl radical containing 1 to 8 carbon atoms, which is optionally substituted with at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an optionally substituted aryl radical containing between 6 and 12 carbon atoms, or
• an aralkyl part having an alkyl part containing between 5 and 14 carbon atoms and an aryl part containing between 6 and 12 carbon atoms, which is optionally substituted on the aryl part with halogens, alkyls and/or alkoxyls containing 1 to 3 carbon atoms,
- the symbols Z are alike or different and represent:
• a hydrogen radical, or
• a group R1 with the condition that there are, per molecule, at least two symbols Z representing a hydrogen atom.

4. Composition according to one of the preceding claims, **characterized in that** the organosiloxane monomers, oligomers and/or polymers C possessing reactive ≡SiOH units have at least one unit of formula (IV) and end with units of formula (V) or are cyclic entities consisting of units of formula (IV), these formulae being represented below: 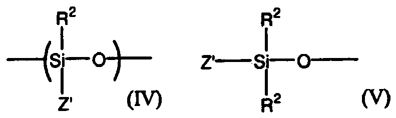 in which:
- the symbols R2 are identical or different and represent:
• a linear or branched alkyl radical containing 1 to 8 carbon atoms, which is optionally substituted with at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an optionally substituted aryl radical containing between 6 and 12 carbon atoms, or
• an aralkyl part having an alkyl part containing between 5 and 14 carbon atoms and an aryl part containing between 6 and 12 carbon atoms, which is optionally substituted on the aryl part with halogens, alkyls and/or alkoxyls containing 1 to 3 carbon atoms, and
- the symbols Z' are alike or different and represent:
■ a hydroxyl group, or
■ a group R2 with the condition that, per molecule, at least two symbols Z represent a hydroxyl group -OH.

5. Composition according to one of the preceding claims, **characterized in that** the organosiloxane monomers, oligomers and/or polymers B possessing a reactive ≡SiH unit correspond to general formula (VI): 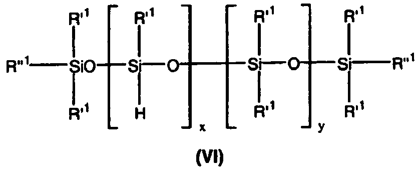 in which:
- x and y each represent an integer or fractional number ranging between 0 and 200,
- R'1 and R"1 represent, independently of one another:
• a linear or branched alkyl radical containing 1 to 8 carbon atoms, which is optionally substituted with at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an optionally substituted aryl radical containing between 6 and 12 carbon atoms, or
• an aralkyl part having an alkyl part containing between 5 and 14 carbon atoms and an aryl part containing between 6 and 12 carbon atoms, which is optionally substituted on the aryl part, and
- it being possible for R"1 also to correspond to hydrogen, with the condition according to which the radicals R"1 correspond to hydrogen when x = 0.

6. Composition according to one of the preceding claims, **characterized in that** the organosiloxane monomers, oligomers and/or polymers C possessing a reactive ≡SiOH unit correspond to general formula (VII): 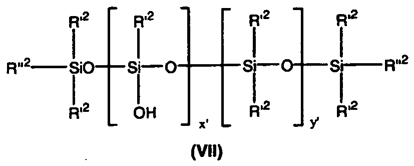 in which:
- x' and y' each represent an integer or a fractional number ranging between 0 and 1200,
- R'2 and R"2 represent, independently of one another:
• a linear or branched alkyl radical containing 1 to 8 carbon atoms, which is optionally substituted with at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an optionally substituted aryl radical containing between 6 and 12 carbon atoms, or
• an aralkyl part having an alkyl part containing between 5 and 14 carbon atoms and an aryl part containing between 6 and 12 carbon atoms, which is optionally substituted on the aryl part,
- it being possible for R"2 also to correspond to OH, with the condition according to which the radicals R"2 correspond to OH when x' = 0.

7. Use of at least one catalyst A as defined according to either one of Claims 1 and 2, for the dehydrogenative condensation between, on the one hand, at least one organosiloxane monomer, oligomer and/or polymer B possessing, per molecule, at least one reactive ≡SiH unit and, on the other hand, at least one organosiloxane monomer, oligomer and/or polymer C possessing, per molecule, at least one reactive ≡SiOH unit.

8. Process for polymerizing and/or crosslinking a siloxane composition X as defined according to any one of Claims 1 to 6, **characterized in that** a dehydrogenative condensation reaction is carried out between said compounds B and C, and **in that** said dehydrogenative condensation is initiated with the catalyst A as defined according to either one of Claims 1 and 2.

9. Process for the production of at least one release coating on a support, preferably a flexible support, **characterized in that** it consists essentially in applying, to this support, a siloxane composition X as defined according to any one of Claims 1 to 6, and then in allowing the siloxane composition X to crosslink, optionally after thermal activation up to a temperature of 50°C.

10. Process for the production of at least one article made of crosslinked silicone foam, **characterized in that** it consists essentially in crosslinking a siloxane composition X as defined according to any one of Claims 1 to 6, ensuring that at least a part of the hydrogen gas formed is not expelled from the reaction medium.

11. Coating obtained by crosslinking and/or polymerization of the siloxane composition X as defined according to any one of Claims 1 to 6.

12. Article consisting of a solid material of which at least one surface is coated with the siloxane composition X as defined according to any one of Claims 1 to 6 which has been thermally crosslinked and/or polymerized.

13. Crosslinked silicone foam obtained by crosslinking a siloxane composition X as defined according to any one of Claims 1 to 6.
